# EUROPEAN PATENT SPECIFICATION

(11) **EP 0 568 320 B1**
(45) Date of publication and mention of the grant of the patent: **16.06.1999**
(21) Application number: 93303286.4
(22) Date of filing: 27.04.1993
(51) Int. Cl.: H04N 7/01

(54) **A method of and apparatus for displaying images**
Bildvorführungsanlage und -verfahren
Procédé et appareil pour afficher des images

(30) Priority: 29.04.1992 GB 9209204
(43) Date of publication of application: 03.11.1993
(73) Proprietor: QUANTEL LIMITED, Newbury Berkshire RG14 2LT (GB)
(72) Inventor: Nonweiler, Brian Robert, Newbury, Berkshire RG13 (GB); Rogers, Simon Darryl, Newbury, Berkshire RG13 (GB)
(74) Representative: Whitten, George Alan

(56) References cited:
- EP-A- 0 010 433
- EP-A- 0 467 683
- SMPTE JOURNAL, vol.93, no.3, March 1984, SCARSDALE, NY US pages 216 - 227 POETSCH 'FLD 60 - an advanced film scanning system'
- BRITISH KINEMATOGRAPHY SOUND AND TELEVISION SOCIETY JOURNAL, vol.67, no.12, December 1985, LONDON GB pages 670 - 673 SCHUTZ 'problems in the PAL tape to film system'

## Description

The invention relates to a method of and apparatus for displaying images. The invention has particular, but not exclusive, application to the display of images captured at one frame rate on a monitor at another frame rate, for example the display at video frame rate of images captured at film frame rate.

During post production work it is common for images captured on film to be converted into electrical video signals for storage and modification in an electronic environment. Once converted into electrical signals the images can be edited, combined with other images and/or modified for example by retouching features in the image or adjusting the colour balance of the image.

One of the problems associated with converting between film and video is that the display rate differs between the two media. Film is usually captured at a rate of 24 frames per second whereas video according to the HDTV standard is displayed at a rate 30 frames per second. When converting from film to video it is usual to maintain the integrity of the frames by converting each film frame to a corresponding single video frame. This enables each frame in the film to be accessed for editing and/or modification which is essential for example where mattes are to be produced electronically for use in combining two images on a frame by frame basis. Also, editing can be work out in an electronic environment, thereby avoiding the need actually to cut film and enabling many different edit combinations to be tried. Once the editor is satisfied with the result of an edit list can be produced which identifies the manner in which frames are combined, thus enabling cutting of the film to match exactly the video edit.

Editing work is usually done on a frame-by-frame basis and electronic editing equipment is available which is able to display simultaneously several frames of one or more video clips at respective display areas of the monitor. Thus, during editing there are usually no significant problems caused by the different display rates of the two media because frames are viewed as stills on the monitor.

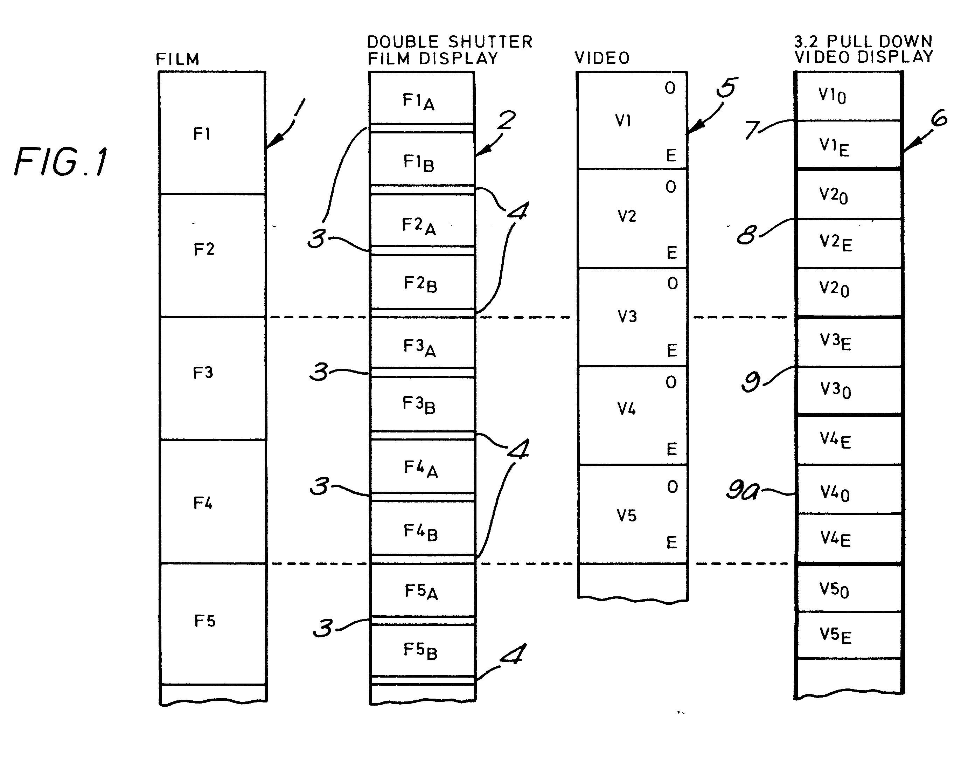

However, during playback of the video one effect of the one-to-one conversion from film is that movement in the video image is seen speeded up as compared to corresponding movement in the film image. The reason for this will be explained with reference to Figure 1 of the accompanying drawings. As shown in Figure 1 a film clip 1 comprises a plurality of film frames F1 to F5. As mentioned hereinabove a film clip comprises a plurality of image frames captured at a rate of twenty four frames per second. The human eye is sensitive to the fundamental frequency at which moving images are displayed and when film is displayed at twenty four frames per second a 24 Hz flicker can be seen in the displayed image. In order to reduce the perceived flicker film projectors are provided with a double-shuttered arrangement whereby each frame is displayed twice. This double-shuttered projection arrangement increases the fundamental frequency of display to 48Hz which is less detectable by the human eye. This double shuttered displaying of film is represented in Figure 1 by the clip 2 in which each frame is displayed twice, eg F1_{A} and F1_{B}, with the displays F1_{A} and F1_{B} being separated by an in-frame blanking period 3 and the display of consecutive frames, eg F1_{B} and F2_{A} separated by an inter-frame blanking period 4 corresponding to the frame pull down period of the projector or other display apparatus (not shown).

Next to the displayed clip 2 in Figure 1 there is shown a video clip 5 comprising plural video frames V1 to V5. The video frames V1 to V5 correspond respectively to the film frames F1 to F5. The vertical length of each frame in Figure 1 represents the length of time that the frame is displayed during playback. As can be seen five frames of the video clips correspond to the same period of time as four frames of the film clip 1. Thus, if the video frames V1 to V5 are output for display at video rate (30 frames per second) the playback will be 25% quicker than the display of corresponding film frames F1 to F5 at film rate (24 frames per second) and movement in the image when displayed will be speeded up accordingly.

Video frames are formed from interleaved fields which are displayed at twice the frame rate. Thus, each video frame is formed from two interleaved fields, one field corresponding to all of the even numbered lines in the frame and the other field corresponding to all of the odd numbered lines in the field. The odd and even fields in each frame of video V1 to V5 are represented by the symbols '0' and 'E' in Figure 1.

One way in which the above problem of different display rates can be overcome is to increase the number of fields used to represent video frames. By increasing the number of fields representing two consecutive video frames from four to five, the time period occupied by the two video frames will equal that of the corresponding two film frames. This approach is known as 3:2 pull down and is illustrated by the display scan clip 6 shown in Figure 1 of the accompanying drawings. As can be seen in Figure 1 the first two film frames F1 and F2 are displayed as a first display frame 7 comprising an odd field V1ₒ and an even field V1_{E} and a second display frame 8 comprising two odd fields V2ₒ and an even field V2_{E}. The second frame 8 is displayed by outputting first the odd field V2ₒ then the even field V2_{E} and then the same odd field V2ₒ once again.

One problem associated with 3:2 pull down is caused by the repeated display of one field in every other frame in the clip. The extra field in every other frame causes that frame to be displayed for a longer period of time and thus motion in the frame during preview is slowed down by the presence of the extra field. This slowing down of motion only occurs in every other field and over two consecutive fields the average speed of motion is correct. However, the difference between the two fields causes a moving object to appear to move jerkily across the image. The introduction of such unwanted movement artifacts in the image is clearly undesirable.

Furthermore as mentioned hereinabove, odd and even fields making up a frame are interleaved and during the previewing of a clip the monitor alternates between the display of odd and even fields. This creates a problem when a clip is displayed using 3:2 pull down, the problem being apparent from inspection of the fields making up the first and second frames 7 and 8 in the displayed clip 6. It will be seen that the correct sequence of display of odd and even fields is maintained by reversing the order of display of the two fields comprising the third frame 9. Moreover, the order of the three fields comprising the fourth frame 9a is even-odd-even, the reverse of the sequence of the second frame 8. It will be appreciated that 3:2 pull down therefore requires complex control circuitry to control the order in which fields are delivered to the monitor for display.

An alternative to the use of 3:2 pull down is to increase the number of video frames in a clip to be displayed using techniques usually associated with slow-motion effects, such as those described in our US patent application no. 07/242,796, and corresponding published European application no. EP-A-0 311268. One problem with this approach is that the one-to-one relationship between the film frames F1 to F10 and the displayed frames is lost.

EP-A-467683 was identified by the European Patent Office during examination. The document is concerned with a television camera which captures an image for storage as an array of pixel data in a memory. The pixel data can be encoded as an NTSC signal or a PAL signal by scanning the memory for only the right number of pixels for the desired signal format. The above described 3:2 pull down is mentioned with reference to a film scanning system in SMPTE Journal Vol. 93(1984) March, No. 3, pages 216-227 also identified by the European Patent Office.

The present invention aims to overcome the above and associated problems by providing a scheme by which video frames corresponding to respective film frames are displayed at a rate corresponding to the display rate of the film frames.

According to one aspect of the invention therefore there is provided a method of displaying an input image clip on an electronic monitor able to display image frames during respective display frame periods at a display frame rate, the input image clip comprising a plurality of input image frames at an input frame rate with each input frame being displayable during an input frame period, the display frame rate being greater than the frame rate of the input image clip, which method comprises: providing each frame of the input image clip to the monitor at the input frame rate, displaying each input image frame on the monitor during a display frame period; and adding to each display frame period at least one overscan period of a duration such that together the display frame period and the overscan period are equal to the input frame period, whereby the rate at which frames are displayed on the monitor is reduced to the frame rate of the input image clip.

According to another aspect of the invention there is provided an apparatus for displaying an input image clip comprising a plurality of input image frames at an input frame rate with each input frame being displayable during an input frame period, the apparatus comprising: a monitor for displaying image frames during respective display frame periods at a display frame rate greater than the frame rate of the input image clip; and a controller for providing each frame of the input image clip to the monitor at the input frame rate, for causing each input image frame to be displayed on the monitor during a display frame period, and for adding to each display frame period at least one overscan period of a duration such that together the display frame period and the overscan period are equal to the input frame period, whereby the rate at which frames are displayed on the monitor is reduced to the frame rate of the input image clip.

In a further aspect the invention provides a system for displaying an image clip, the system comprising: a linescan display, having a multiplicity of display scanlines and arranged normally to display image frames during display frame periods at a display frame rate in response to vertical synchronizing signals that change between initial and final values to indicate the beginning and end of a frame period and line synchronizing signals that change between initial and final values to indicate the beginning and end of a display line scan period, a source for supplying data defining an input image clip comprising a plurality of input image frames at an input frame rate with each input frame being displayable during an input frame period, the display frame rate being greater than the frame rate of the input image clip, each input image frame comprising a plurality of lines of pixels, and a control circuit for controlling the generation of said vertical synchronizing signals so as to add to each display frame period at least one overscan period of a duration such that together the display frame period and the overscan period are equal to the input frame period, whereby the rate at which image frames are displayed on said display is reduced to the frame rate of the input image clip.

The above and further features of the invention are set forth with particularity in the appended claims and together with advantages thereof will become clearer from consideration of the following detailed description of an exemplary embodiment of the invention given with reference to the accompanying drawings.

In the drawings:
Figure 1 is a schematic representation of known methods of display;
Figure 2 is a schematic system diagram of a system for displaying an image clip; and
Figure 3 is a schematic representation of the method of display in the system of Figure 2.

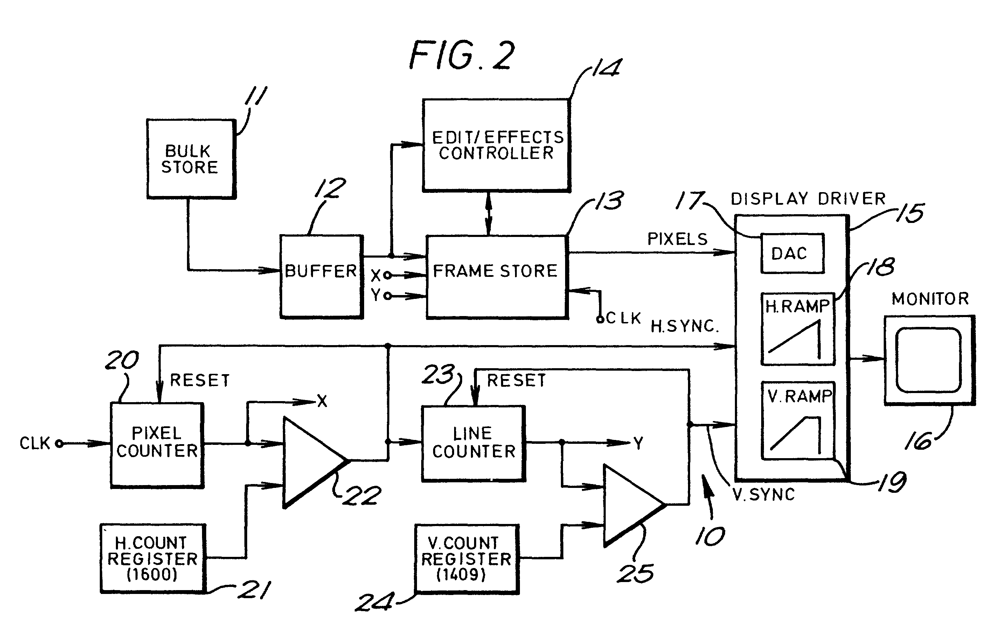

Referring now to Figure 2 of the accompanying drawings, there is shown an editing system 10 comprising a bulk store 11 for storing data representing the frames of plural video clips. The bulk store may for example be an array of disc drives among which the video frames are distributed, such as the store disclosed in our British Patent Application No. 9122215.8 published as GB-A-2261803. The data representing the video frames is preferably high resolution data, for example 1125 lines per frame, and the bulk store 11 is able to deliver video frames at display rate (30 frames per second) according to the HDTV standard. Data may be recorded off-line on a VTR for example and downloaded into the bulk store when required. For the purpose of further explanation it will be assumed that the bulk store 11 contains data representing frames of a video clip derived from respective frames of a film clip. That is to say the bulk store 11 at least contains data representing the video clip 5 comprising video frames V1 and V5 as illustrated in Figure 1 of the drawings.

Data from the bulk store 11 is delivered via a buffer 12 to a framestore 13 and/or to an edit/effects unit 14 which enables for example individual or groups frames to be retouched or otherwise modified and enables two or more video clips to be combined. That is to say, the unit 14 is able to perform editing operations similar to those available in the system manufactured and sold by us under the trade mark "HARRY".

Pixel data from the framestore 13 are input at display rate to a display driver 15. The rate of transfer of pixels from the framestore 13 to the display driver 15 is controlled by a system clock CLK running at display rate, which in the case of HDTV is 54MHz. Addressing circuits (not shown) within the framestore 13 ensure that pixels are read from the framestore 13 in raster order. The display driver 15 converts the pixel data into an analogue signal which is used to drive a monitor 16 to display thereon the image represented by the data.

As is well known, in a TV type monitor an image is displayed on a screen by scanning an electron beam over the screen in raster sequence. In the case of a colour monitor three beams are used to cause red, green and blue components forming a colour image to be displayed on the screen. The or each beam is controlled by a video signal which varies continuously the intensity of the beam, a horizontal scan signal which causes the beam to scan horizontally across the screen and to return quickly at the end of one scan line to the beginning of the next, and a vertical scan signal which causes the beam to move to the next scan line and when the bottom of the screen is reached to return quickly to the top of the screen.

The display driver 15 comprises a digital to analogue converter circuit 17 for converting pixels into a video signal for varying the intensity of the or each electron beam, a horizontal ramping circuit 18 for generating the required horizontal scan signal, and a vertical ramping circuit 19 for generating the required vertical ramp signal. The horizontal ramping circuit 18 produces a signal which ramps up from a minimum to a maximum in a period corresponding to that of a single line scan and is reset to the minimum by an external synchronising signal H. Sync.. Similarly, the vertical ramping circuit 19 produces a signal which ramps up from a minimum to a maximum in a period corresponding to that of a field scan (ie all 563 odd and 562 even numbered lines in a 1125 line system) and is reset to the minimum by an external synchronising signal V. Sync..

The system 10 includes circuitry for generating the H. Sync. and V. Sync. signals used to control scanning in the monitor 16. A pixel counter 20, driven by the clocking signal CLK running at the rate of display of pixels on the monitor 16, ie 13.5MHz, counts clock pulses each corresponding to the outputting of a pixel from the framestore 13. A register 21 contains a value corresponding to the number of pixels in each line. For a high definition TV picture of the above mentioned standard each line comprises 1600 pixels and so a value corresponding to that number is held in the register 21. The pixel counter 20 and the register 21 are connected to a comparator 22 arranged such that when the contents of the counter and the register are the same, ie the counter has counted to 1600, a pulse is output to a line counter 23 and to a reset input in the pixel counter 20 causing the pixel counter to reset to zero.

It will be appreciated that at any given instant in time the output from the pixel counter 20 will be directly related to the address of the pixel counter 20 and is therefore delivered to the framestore 13 in order to identify the address of the data defining the current pixel to be displayed.

The output from the comparator 22 corresponds to the abovementioned H.Sync. signal and is input to the display driver 15 causing the horizontal ramping circuit 18 to reset to minimum. Each time an H. Sync. pulse is applied to the input of the line counter 23 it causes the counter 23 to increment by one odd or even line number depending on whether it is data for an odd or even field that is currently being output to the monitor for display. Each displayed video frame is, of course, made up from interlaced odd and even fields but for the purpose of simplifying the following explanation description will be made of the circuits operation in respect of the odd field only. The output from the line counter 23 is also directly related to the address of the pixel in the framestore 13. The count Y from the line counter is therefore delivered to the framestore 13 in order to identify the vertical address of the data defining the current pixel to be displayed.

A second register 24 contains a value corresponding to the highest numbered line in the field. In a 1125 line system the register 24 would contain a value corresponding to the number 1125. The line counter 23 and the second register 24 are coupled to a comparator 25 which outputs a pulse when the count in the line counter 23 matches the value in the register 24. The signal from the comparator 25 corresponds to the abovementioned V.Sync. signal and is used to reset the line counter 23 ready to count lines in the next field and to cause the horizontal ramping circuit 19 to reset to a minimum.

When a video clip derived from a film clip is to be displayed the value in the register 24 is increased by 25%, ie to the value 1409 so that the number of lines counted between V.Sync. pulses is increased. The pixel clock rate remains the same (54MHz) and the rate at which lines are scanned also remains unchanged but since the number of lines has increased, the duration of each frame is increased accordingly. Since the vertical ramping circuit 19 is arranged to ramp up to a maximum in a time period corresponding to the full 1125 lines it will remain at the maximum for any further lines thereafter, only resetting when a V. Sync. pulse is received. Thus, the electron beam of the monitor 16 is caused to scan each line in the field being displayed and then to scan repeatedly the last line until the V.Sync. pulse causes the ramping circuit to reset.

The system is also arranged so that once all lines of data defining the field have been output from the framestore 13 only null data is output until such time as the line counter is reset to zero.

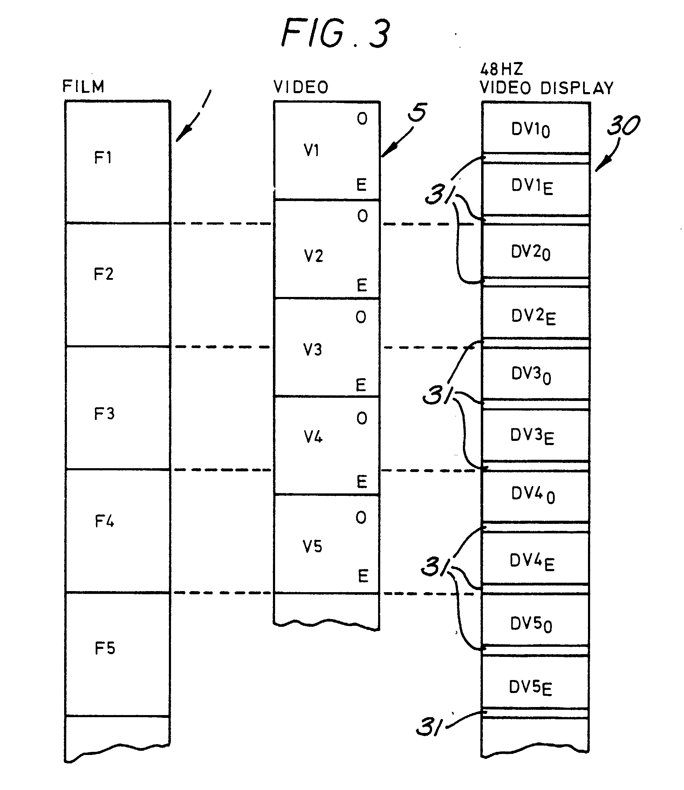

The effect that this increase in the number of lines between V.Sync. pulses has on the timing of the displaying of the clip is shown in Figure 3 of the accompanying drawings. Referring to Figure 3 it will be seen that the film clip 1 and corresponding video clip 5 are identical to the film and video clips shown in Figure 1. Thus, video frames V1 to V5 represent respective ones of the film frames F1 to F5. For a given video field, eg V1ₒ which is the odd field of frame V1, all pixels are clocked from the framestore 13 at video display rate for display on the monitor. Once data for all pixels in a given field has been output for display null data is output for display until such time as the V.Sync. pulse is generated, thereby identifying the start of a new field. Thus the pixels represented by the null data are displayed on the last line of the monitor. The contribution that the last line makes to the image is negligible and indeed in most cases the last line is not seen on the display at all. The null data supplied to the monitor may therefore have any suitable value for example corresponding to say black pixels where the last line is visible or black or white pixels or even to a part of the image displayed elsewhere on the monitor where the last line cannot be seen on the monitor.

By increasing the number of lines between V. Sync. pulses whilst leaving unchanged the rate of which image pixels are output for display, the system 10 generates a display output comprising odd and even video fields V1₀, V1_{E}, V2₀, V2_{E}, etc each separated by an overscan period 31. The overscan periods 31 correspond approximately to the projection blanking periods 3 and 4 during the display of a film clip as shown in Figure 1. Thus, video fields are displayed at a rate of forty eight fields per second and thus corresponds to the 48 Hz rate achieved by double-shuttered projection. That is to say, the rate at which the fields DV1₀, DV1_{E}, etc. are displayed is reduced to the double-shuttered frame rate of the film 1.

During the overscan periods 31 there is no refresh of the displayed image and this affects flickering of the displayed image. However, the flickering is at 48Hz and is in many respects similar to the flicker present in double-shuttered film displays. After a few minutes viewing the viewers eye compensates for any flicker so that the perceived level of flicker is reduced significantly.

By introducing overscan periods 31 between the display of consecutive fields the abovementioned problem of jerky movement in the displayed image is overcome and movement is seen to occur at the correct speed.

Having thus described the present invention by reference to a preferred embodiment it is to be well understood that the embodiment in question is exemplary only and that modifications and variations such as will occur to those possessed of appropriate knowledge and skills may be made without departure from the scope of the invention as set forth in the appended claims.

## Claims

1. A method of displaying an input image clip on an electronic monitor (16) able to display image frames during respective display frame periods at a display frame rate, the input image clip comprising a plurality of input image frames at an input frame rate with each input frame being displayable during an input frame period, the display frame rate being greater than the frame rate of the input image clip, which method comprises:
providing each frame of the input image clip to the monitor (16) at the input frame rate,
displaying each input image frame on the monitor (16) during a display frame period; and
adding to each display frame period at least one overscan period (31) of a duration such that together the display frame period and the overscan period are equal to the input frame period, whereby the rate at which frames are displayed on the monitor (16) is reduced to the frame rate of the input image clip.

2. A method as claimed in claim 1, wherein each input image frame is divided into an odd input field (V1_{O}, V2_{O}) and an even input field (V1_{E}, V2_{E}) and each display frame period is divided into an odd display field (DV1_{O}, DV2_{O}) period and an even display field (DV1_{E}, DV2_{E}) period, each odd input field being provided to the monitor (16) for display during a corresponding odd display field period and each even input field being provided to the monitor for display during a corresponding even display field period, and each display field period being separated from the next display field period by said overscan period (31).

3. A method as claimed in claim 1 or 2, wherein said step of adding comprises creating the at least one overscan period (31) by adding additional lines to increase the number of lines representing each frame to be greater than the number of lines available on the monitor (16) for display of each frame.

4. A method as claimed in claim 3, wherein the additional lines comprise null data and are provided for display during the at least one overscan period (31).

5. A method as claimed in claim 3 or 4, wherein the additional lines are provided for display at or off the bottom of a screen of the monitor (16).

6. A method as claimed in any preceding claim, wherein each display frame period is separated from the next display frame period by said at least one overscan period (31).

7. An apparatus for displaying an input image clip comprising a plurality of input image frames at an input frame rate with each input frame being displayable during an input frame period, the apparatus comprising:
a monitor (16) for displaying image frames during respective display frame periods at a display frame rate greater than the frame rate of the input image clip; and
a controller (15, 20 to 25) for providing each frame of the input image clip to the monitor at the input frame rate, for causing each input image frame to be displayed on the monitor during a display frame period, and for adding to each display frame period at least one overscan period (31) of a duration such that together the display frame period and the overscan period are equal to the input frame period, whereby the rate at which frames are displayed on the monitor (16) is reduced to the frame rate of the input image clip.

8. An apparatus as claimed in claim 7, further comprising frame dividing means (20 to 25) for dividing each input image frame into an odd input field and an even input field and wherein said controller (15) is arranged to divide each display frame period into an odd display field period and an even display field period, to provide each odd input field to the monitor (16) for display during a corresponding odd display field period and each even input field to the monitor for display during a corresponding even display field period, and to separate each display field period from the next display field period by said overscan period (31).

9. An apparatus as claimed in claim 7 or 8, further comprising line adding means (23, 24, 25) for adding lines to increase the number of lines representing each frame to be greater than the number of lines available on the monitor (16) for display of each frame.

10. An apparatus as claimed in claim 9, wherein the line adding means (23, 24, 25) is arranged to add lines comprising null data which are provided for display during said at least one overscan period.

11. An apparatus as claimed in claim 9 or 10, wherein the line adding means (23, 24, 25) is arranged to add lines for display at or off the bottom of a screen of the monitor.

12. An apparatus as claimed in any of claims 7 to 11, wherein the controller causes each display frame period to be separated from the next display frame period by said at least one overscan period (31).

13. A system for displaying an image clip, the system comprising:
a linescan display (16), having a multiplicity of display scanlines and arranged normally to display image frames during display frame periods at a display frame rate in response to vertical synchronizing signals (V. RAMP) that change between initial and final values to indicate the beginning and end of a frame period and line synchronizing signals (H. RAMP) that change between initial and final values to indicate the beginning and end of a display line scan period,
a source (13) for supplying data defining an input image clip comprising a plurality of input image frames at an input frame rate with each input frame being displayable during an input frame period, the display frame rate being greater than the frame rate of the input image clip, each input image frame comprising a plurality of lines of pixels, and
a control circuit (15, 20 to 25) for controlling the generation of said vertical synchronizing signals so as to add to each display frame period at least one overscan period (31) of a duration such that together the display frame period and the overscan period are equal to the input frame period, whereby the rate at which image frames are displayed on said display (16) is reduced to the frame rate of the input image clip.

14. A system as claimed in claim 13, wherein said control circuit comprises a pixel counter (20) for counting pixels between the line synchronizing signals and a line counter (23) for counting lines between the vertical synchronizing signals.

15. A system as claimed in claim 14, wherein said pixel counter (20) and said line counter (23) each output a respective count (X, Y) which is supplied to said source to synchronize the supplying of data therefrom to said line synchronizing signals and said vertical synchronizing signals.

16. A system as claimed in claim 15, wherein said control circuit further comprises a comparing circuit (22) for comparing the count output from said pixel counter (20) with a predetermined value and for generating said line synchronizing signals according to the result of the comparison.

17. A system as claimed in claim 15 or 16, wherein said control circuit comprises a comparing circuit (25) for comparing the count output from said line counter (23) with a predetermined value and for generating said vertical synchronizing signals according to the result of the comparison.

18. A system as claimed in any of claims 13 to 17, wherein said source comprises a store (13) having a serial output for outputting data in display order.

19. A system as claimed in any of claims 13 to 18, wherein said display comprises a display driver (15), responsive to said data from said source (13) and to said line synchronizing signals and said vertical synchronizing signals, for producing driving signals to drive a monitor for the display of the image clip thereon.

20. A system as claimed in claim 19, wherein said display driver (15) comprises a horizontal ramping circuit (18) for producing an output signal which resets to a minimum in response to a line synchronizing signal and ramps up to a maximum over the period between successive line synchronizing signals.

21. A system as claimed in claim 19 or 20, wherein said display driver comprises a vertical ramping circuit (19) for producing an output signal which resets to a minimum in response to a vertical synchronizing signal, ramps up to a maximum over a period corresponding to a normal field display period at said second frame rate, and remains at said maximum until a reset occurs.

22. A system as claimed in any of claims 13 to 21, further comprising an image processing circuit (14) for processing said image frames before said frames are displayed.

## Patentansprüche

1. Verfahren zur Anzeige eines Eingabebildclips auf einem elektronischen Monitor (16), der in der Lage ist, Bilder während jeweiliger Anzeigebildperioden mit einer Anzeigebildrate anzuzeigen, wobei der Eingabebildclip eine Mehrzahl von Eingabebildern mit einer Eingabebildrate umfaßt, wobei jedes Eingabebild während einer Eingabebildperiode anzeigbar ist, wobei die Anzeigebildrate größer als die Bildrate des Eingabebildclips ist, wobei das Verfahren umfaßt:
- Liefern jedes Bilds des Eingabebildclips zu dem Monitor (16) mit der Eingabebildrate,
- Anzeigen jedes Eingabebilds auf dem Monitor (16) während einer Anzeigebildperiode und
- Hinzufügen mindestens einer Zusatzabtastperiode (31) einer solchen Dauer zu jeder Anzeigebildperiode, daß die Anzeigebildperiode und die Zusatzabtastperiode zusammen gleich der Eingabebildperiode sind, wodurch die Rate, mit der Bilder auf dem Monitor (16) angezeigt werden, auf die Bildrate des Eingabebildclips herabgesetzt wird.

2. Verfahren nach Anspruch 1, bei dem jedes Eingabebild in ein ungerades Eingabehalbbild (V1_{O}, V2_{O}) und ein gerades Eingabehalbbild (V1_{E}, V2_{E}) aufgeteilt wird und jede Anzeigebildperiode in eine ungerade Anzeigehalbbildperiode (DV1_{O}, DV2_{O}) und eine gerade Anzeigehalbbildperiode (DV1_{E}, DV2_{E}) unterteilt wird, wobei jedes ungerade Eingabehalbbild während einer entsprechenden ungeraden Anzeigehalbbildperiode dem Monitor (16) zur Anzeige zugeführt wird und jedes gerade Eingabehalbbild während einer entsprechenden geraden Anzeigehalbbildperiode dem Monitor zur Anzeige zugeführt wird und wobei jede Anzeigehalbbildperiode durch die Zusatzabtastperiode (31) von der nächsten Anzeigehalbbildperiode getrennt wird.

3. Verfahren nach Anspruch 1 oder 2, bei dem der Hinzufügungsschritt umfaßt: Erzeugen der mindestens einen Zusatzabtastperiode (31) durch Hinzufügen von zusätzlichen Zeilen, um die Zahl der jedes Bild repräsentierenden Zeilen zu erhöhen, so daß sie größer als die Zahl der Zeilen ist, die auf dem Monitor (16) zur Anzeige des jeweiligen Bilds verfügbar sind.

4. Verfahren nach Anspruch 3, bei dem die zusätzlichen Zeilen Nulldaten umfassen und zur Anzeige während der mindestens einen Zusatzabtastperiode (31) vorgesehen sind.

5. Verfahren nach Anspruch 3 oder 4, bei dem die zusätzlichen Zeilen zur Anzeige am unteren Teil eines Bildschirms des Monitors (16) oder außerhalb vorgesehen sind.

6. Verfahren nach einem der vorhergehenden Ansprüche, bei dem jede Anzeigebildperiode von der nächsten Anzeigebildperiode durch die mindestens eine Zusatzabtastperiode (31) getrennt wird.

7. Vorrichtung zur Anzeige eines Eingabebildclips, der eine Mehrzahl von Eingabebildern mit einer Eingabebildrate umfaßt, wobei jedes Eingabebild während einer Eingabebildperiode anzeigbar ist, wobei die Vorrichtung umfaßt:
- einen Monitor (16) zur Anzeige der Bilder während jeweiliger Anzeigebildperioden mit einer Anzeigebildrate, die größer als die Bildrate des Eingabebildclips ist, und
- eine Steuereinheit (15, 20 bis 25), um jedes Bild des Eingabebildclips mit der Eingabebildrate dem Monitor zuzuführen, um die Anzeige jedes Eingabebilds auf dem Monitor während einer Anzeigebildperiode zu bewirken und um zu jeder Anzeigebildperiode mindestens eine Zusatzabtastperiode (31) einer solchen Dauer hinzuzufügen, daß die Anzeigebildperiode und die Zusatzabtastperiode zusammen gleich der Eingabebildperiode sind, wodurch die Rate, mit der die Bilder auf dem Monitor (16) angezeigt werden, auf die Bildrate des Eingabebildclips herabgesetzt wird.

8. Vorrichtung nach Anspruch 7, ferner umfassend Bildaufteilungsmittel (20 bis 25) zum Aufteilen jedes Eingabebilds in ein ungerades Eingabehalbbild und ein gerades Eingabehalbbild, wobei die Steuereinheit (15) dazu ausgelegt ist, jede Anzeigebildperiode in eine ungerade Anzeigehalbbildperiode und eine gerade Anzeigehalbbildperiode zu unterteilen, jedes ungerade Eingabehalbbild dem Monitor (16) zur Anzeige während einer entsprechenden ungeraden Anzeigehalbbildperiode und jedes gerade Eingabehalbbild dem Monitor zur Anzeige während einer entsprechenden geraden Anzeigehalbbildperiode zuzuführen und jede Anzeigehalbbildperiode von der nächsten Anzeigehalbbildperiode durch die Zusatzabtastperiode (31) zu trennen.

9. Vorrichtung nach Anspruch 7 oder 8, ferner umfassend Zeilenhinzufügungsmittel (23, 24, 25) zum Hinzufügen von Zeilen, um die Zahl der jedes Bild repräsentierenden Zeilen zu erhöhen, so daß sie größer als die Zahl der Zeilen ist, die auf dem Monitor (16) zur Anzeige jedes Bilds verfügbar sind.

10. Vorrichtung nach Anspruch 9, bei der die Zeilenhinzufügungsmittel (23, 24, 25) dazu ausgelegt sind, Zeilen mit Nulldaten hinzuzufügen, welche zur Anzeige während der mindestens einen Zusatzabtastperiode vorgesehen sind.

11. Vorrichtung nach Anspruch 9 oder 10, bei der die Zeilenhinzufügungsmittel (23, 24, 25) dazu ausgelegt sind, Zeilen zur Anzeige am unteren Teil eines Bildschirms des Monitors oder außerhalb hinzuzufügen.

12. Vorrichtung nach einem der Ansprüche 7 bis 11, bei der die Steuereinheit die Trennung jeder Anzeigebildperiode von der nächsten Anzeigebildperiode durch die mindestens eine Zusatzabtastperiode (31) bewirkt.

13. System zur Anzeige eines Bildclips, wobei das System umfaßt:
- eine Zeilenabtastanzeige (16), die eine Mehrzahl von Anzeigeabtastzeilen aufweist und dazu ausgelegt ist, normalerweise Bilder während Anzeigebildperioden mit einer Anzeigebildrate in Antwort auf vertikale Synchronisierungssignale (V. RAMP), die sich zwischen Anfangs- und Endwerten ändern, um den Beginn und das Ende einer Bildperiode anzuzeigen, und Zeilensynchronisierungssignale (H. RAMP) anzuzeigen, die sich zwischen Anfangs- und Endwerten ändern, um den Beginn und das Ende einer Anzeigezeilenabtastperiode anzugeben,
- eine Quelle (13) zur Bereitstellung von Daten, die einen Eingabebildclip definieren, welcher eine Mehrzahl von Eingabebildern mit einer Eingabebildrate umfaßt, wobei jedes Eingabebild während einer Eingabebildperiode anzeigbar ist, wobei die Anzeigebildrate größer als die Bildrate des Eingabebildclips ist, wobei jedes Eingabebild eine Mehrzahl von Pixelzeilen umfaßt, und
- eine Steuerschaltung (15, 20 bis 25) zur Steuerung der Erzeugung der vertikalen Synchronisierungssignale derart, daß zu jeder Anzeigebildperiode mindestens eine Zusatzabtastperiode (31) einer solchen Dauer hinzugefügt wird, daß die Anzeigebildperiode und die Zusatzabtastperiode zusammen gleich der Eingabebildperiode sind, wodurch die Rate, mit der die Bilder auf der Anzeige (16) angezeigt werden, auf die Bildrate des Eingabebildclips herabgesetzt wird.

14. System nach Anspruch 13, bei dem die Steuerschaltung einen Pixelzähler (20) umfaßt, um Pixel zwischen den Zeilensynchronisierungssignalen zu zählen, sowie einen Zeilenzähler (23), um Zeilen zwischen den vertikalen Synchronisierungssignalen zu zählen.

15. System nach Anspruch 14, bei dem der Pixelzähler (20) und der Zeilenzähler (23) jeweils einen jeweiligen Zählwert (X, Y) ausgeben, der der Quelle zugeführt wird, um die Bereitstellung der Daten von dieser mit den Zeilensynchronisierungssignalen und den vertikalen Synchronisierungssignalen zu synchronisieren.

16. System nach Anspruch 15, bei dem die Steuerschaltung ferner eine Vergleicherschaltung (22) umfaßt, um den von dem Pixelzähler (20) ausgegebenen Zählwert mit einem vorbestimmten Wert zu vergleichen und die Zeilensynchronisierungssignale nach Maßgabe des Vergleichsergebnisses zu erzeugen.

17. System nach Anspruch 15 oder 16, bei dem die Steuerschaltung eine Vergleicherschaltung (25) umfaßt, um den von dem Zeilenzähler (23) ausgegebenen Zählwert mit einem vorbestimmten Wert zu vergleichen und die vertikalen Synchronisierungssignale nach Maßgabe des Vergleichsergebnisses zu erzeugen.

18. System nach einem der Ansprüche 13 bis 17, bei dem die Quelle einen Speicher (13) mit einem seriellen Ausgang zur Ausgabe von Daten in Anzeigereihenfolge umfaßt.

19. System nach einem der Ansprüche 13 bis 18, bei dem die Anzeige einen Anzeigetreiber (15) umfaßt, der auf die Daten von der Quelle (13) und auf die Zeilensynchronisierungssignale und die vertikalen Synchronisierungssignale anspricht, um Ansteuersignale zur Ansteuerung eines Monitors für die Anzeige des Bildclips darauf zu erzeugen.

20. System nach Anspruch 19, bei dem der Anzeigetreiber (15) eine Horizontalanstiegsschaltung (18) umfaßt, um ein Ausgangssignal zu erzeugen, das in Antwort auf ein Zeilensynchronisierungssignal auf ein Minimum zurückgeht und während der Periode zwischen zwei aufeinanderfolgenden Zeilensynchronisierungssignalen bis zu einem Maximum ansteigt.

21. System nach Anspruch 19 oder 20, bei dem der Anzeigetreiber eine Vertikalanstiegsschaltung (19) umfaßt, um ein Ausgangssignal zu erzeugen, das in Antwort auf ein vertikales Synchronisierungssignal auf ein Minimum zurückgeht, über eine Periode, die einer normalen Halbbildanzeigeperiode bei der zweiten Bildrate entspricht, bis zu einem Maximum ansteigt und auf diesem Maximum bleibt, bis eine Rücksetzung stattfindet.

22. System nach einem der Ansprüche 13 bis 21, ferner umfassend eine Bildverarbeitungsschaltung (14) zur Verarbeitung der Bilder, bevor die Bilder angezeigt werden.

## Revendications

1. Un procédé d'affichage d'un clip d'image d'entrée sur un moniteur électronique (16) susceptible d'afficher des trames d'image pendant des périodes respectives de trame d'affichage à une cadence de trame d'affichage, le clip d'image entrée comprenant une série de trames d'image d'entrée à une cadence de trame d'entrée, chaque trame d'entrée pouvant être affichée pendant une période de trame d'entrée, la cadence de trame d'affichage étant supérieure à la cadence de trame du clip d'image d'entrée, le procédé comprenant les étapes consistant à:
amener au moniteur (16) à la cadence de trame d'entrée chaque trame du clip d'image d'entrée,
afficher sur le moniteur (16) chaque trame d'image d'entrée pendant une période de trame d'affichage; et
ajouter à chaque période de trame d'affichage au moins une période (31) de balayage complémentaire d'une durée telle que la somme de la période de trame d'affichage et de la période de balayage complémentaire est égale à la période de trame d'entrée, de sorte que la cadence à laquelle des trames sont affichées sur le moniteur (16) est réduits à la cadence de trame du clip d'image d'entrée.

2. Un procédé selon la revendication 1,- dans lequel chaque trame d'image d'entrée est divisée en un champ d'entrée impair (V1_{O}, V2_{O}) et un champ d'entrée pair (V1_{E}, V2_{E}) et chaque période de trame d'affichage est divisée en une période de champ d'affichage impair (DV1_{O}, DV2_{O}) et une période de champ d'affichage pair (DV1_{E}, DV2_{E}), chaque champ d'entrée impair étant amené pour affichage au moniteur (16) pendant une période de champ d'affichage impair correspondante et chaque champ d'entrée pair étant amené pour affichage au moniteur pendant une période de champ d'affichage pair correspondante, et chaque période de champ d'affichage étant séparée de la période suivante de champ d'affichage par ladite période (31) de balayage complémentaire.

3. Un procédé selon la revendication 1 ou 2, dans lequel ladite étape d'addition comprend une création de la période (31) unique au moins de balayage complémentaire en ajoutant des lignes additionnelles pour augmenter le nombre de lignes qui représentent chaque trame pour qu'il soit supérieur au nombre de lignes disponibles sur le moniteur (16) pour affichage de chaque trame.

4. Un procédé selon la revendication 3, dans lequel les lignes additionnelles comprennent des données nulles et sont amenées pour affichage pendant ladite période unique au moins (31) de balayage complémentaire.

5. Un procédé selon la revendication 3 ou 4, dans lequel les lignes additionnelles sont amenées pour affichage au bas d'un écran du moniteur (16) ou à l'écart du bas d'un tel écran.

6. Un procédé selon une revendication précédente quelconque, dans lequel chaque période de trame d'affichage est séparée de la période suivante de trame d'affichage par ladite période unique au moins (31) de balayage complémentaire.

7. Un appareil d'affichage d'un clip d'image d'entrée comprenant une série de trames d'image d'entrée à une cadence de trame d'entrée, chaque trame d'entrée pouvant être affichée pendant une période de trame d'entrée, l'appareil comprenant:
un moniteur (16) pour afficher des trames d'image pendant des périodes respectives de trames d'affichage à une cadence de trame d'affichage supérieure à la cadence de trame du clip d'image d'entrée; et
un dispositif de commande (15, 25 à 25) pour amener au moniteur chaque trame du clip d'image d'entrée à la cadence de trame d'entrée, pour amener chaque trame d'image d'entrée à être affichée sur le moniteur pendant une période de trame d'affichage, et pour ajouter à chaque période de trame d'affichage au moins une période (31) de balayage complémentaire d'une durée telle que la somme de la période de trame d'affichage et de la période de balayage complémentaire est égale à la période de trame d'entrée, de sorte que la cadence à laquelle des trames sont affichées sur le moniteur (16) est réduite à la cadence de trame du clip d'image d'entrée.

8. Un appareil selon la revendication 7, qui comprend en outre un moyen diviseur (20 à 25) de trames pour diviser chaque trame d'image d'entrée en un champ d'entrée impair et un champ d'entrée pair et dans lequel ledit dispositif de commande (15) est agencé pour diviser chaque période de trame d'affichage en une période de champ d'affichage impair et une période de champ d'affichage pair, pour amener chaque champ d'entrée impair pour affichage au moniteur (16) pendant une période de champ d'affichage impair correspondante et chaque champ d'entrée pair pour affichage au moniteur pendant une période de champ d'affichage pair correspondante, et pour séparer chaque période de champ d'affichage de la période suivante de champ d'affichage par ladite période (31) de balayage complémentaire.

9. Un appareil selon la revendication 7 ou 8, qui comprend en outre un moyen d'addition (23, 24, 25) de lignes pour ajouter des lignes pour augmenter le nombre de lignes qui représentent chaque -trame pour qu'il soit supérieur au nombre de lignes disponibles sur le moniteur (16) pour affichage de chaque trame.

10. Un appareil selon la revendication 9 dans lequel le moyen d'addition (23, 24, 25) de lignes est agencé pour ajouter des lignes qui comprennent des données nulles qui sont amenées pour affichage pendant ladite période unique au moins de balayage complémentaire.

11. Un appareil selon la revendication 9 ou 10 dans lequel ledit moyen d'addition (23, 24, 25) est agencé pour ajouter des lignes pour affichage au bas d'un écran du moniteur ou à l'écart du bas d'un tel écran.

12. Un appareil selon l'une quelconque des revendications 7 à 11, dans lequel ledit dispositif de commande amène chaque période de trame d'affichage à être séparée de la période suivante de trame d'affichage par ladite période unique au moins (31) de balayage complémentaire.

13. Un système d'affichage d'un clip d'image, le système comprenant:
un affichage (16) à balayage de lignes qui inclut une multiplicité de lignes de balayage d'affichage, et qui est agencé normalement pour afficher des trames d'image pendant des périodes de trame d'affichage à une cadence de trame d'affichage en réponse à des signaux (V. RAMP) de synchronisation verticale qui varient entre des valeurs initiale et finale pour indiquer le début et la fin d'une période de trame et des signaux (H. RAMP) de synchronisation de ligne qui varient entre des valeurs initiale et finale pour indiquer le début et la fin d'une période de balayage de ligne d'affichage,
une source (13) destinée à fournir des données qui définissent un clip d'image d'entrée comprenant une série de trames d'image d'entrée à une cadence de trame d'entrée, chaque trame d'entrée pouvant être affichée pendant une période de trame d'entrée, la cadence de trame d'affichage étant supérieure à la cadence de trame du clip d'image d'entrée, chaque trame d'image d'entrée comprenant une série de lignes de pixels, et
un circuit de commande (15, 20 à 25) pour commander la génération desdits signaux de synchronisation verticale de façon à ajouter à chaque période de trame d'affichage au moins une période (31) de balayage complémentaire d'une durée telle que la somme de la période de trame d'affichage et de la période de balayage complémentaire est égale à la période de trame d'entrée, de sorte que la cadence à laquelle des trames sont affichées sur le moniteur (16) est réduite à la cadence de trame du clip d'image d'entrée.

14. Un système selon la revendication 13, dans lequel ledit circuit de commande comprend un compteur (20) de pixels pour compter des pixels entre les signaux de synchronisation de ligne et un compteur (23) de lignes pour compter des lignes entre les signaux de synchronisation verticale.

15. Un système selon la revendication 14, dans lequel ledit compteur (20) de pixels et ledit compteur (23) de lignes sortent chacun un compte respectif (X, Y) qui est amené à ladite source pour synchroniser l'amenée de données à partir de celle-ci auxdits signaux de synchronisation de ligne et auxdits signaux de synchronisation verticale.

16. Un système selon la revendication 15, dans lequel ledit circuit de commande comprend en outre un circuit comparateur (22) pour comparer la sortie de compte dudit compteur (20) de pixels à une valeur prédéterminée et pour engendrer lesdits signaux de synchronisation de ligne en fonction du résultat de la comparaison.

17. Un système selon la revendication 15 ou 16, dans lequel ledit circuit de commande comprend un circuit comparateur (25) pour comparer la sortie de compte dudit compteur (23) de lignes à une valeur prédéterminée et pour engendrer lesdits signaux de synchronisation verticale en fonction du résultat de la comparaison.

18. Un système selon l'une quelconque des revendications 13 à 17, dans lequel ladite source comprend une mémoire (13) à sortie sérielle pour sortir des données en ordre d'affichage.

19. Un système selon l'une quelconque des revendications 13 à 18, dans lequel ledit affichage comprend une commande (15) d'affichage, qui répond auxdites données de ladite source (13) et auxdits signaux de synchronisation de ligne et auxdits signaux de synchronisation verticale pour produire des signaux de commande pour commander un moniteur pour que le clip d'image y soit affiché.

20. Un système selon la revendication 19, dans lequel ladite commande (15) d'affichage comprend un circuit (18) de croissance en rampe horizontale pour produire un signal de sortie qui est restauré à un minimum en réponse à un signal de synchronisation de ligne et croît en rampe jusqu'à un maximum pendant la période comprise entre des signaux successifs de synchronisation de ligne.

21. Un système selon la revendication 10 ou 20, dans lequel ladite commande d'affichage comprend un circuit (19) de croissance en rampe verticale pour produire un signal de sortie qui est restauré à un minimum en réponse à un signal de synchronisation verticale, croît en rampe jusqu'à un maximum pendant une période correspondant à une période normale d'affichage de champ à une deuxième cadence de trame, et reste audit maximum jusqu'à ce qu'une restauration se produise.

22. Un système selon l'une quelconque des revendications 13 à 21, qui comprend en outre un circuit de traitement (14) d'image pour traiter lesdites trames d'image avant que lesdites trames ne soient affichées.
